# EUROPEAN PATENT SPECIFICATION

(11) **EP 1 744 931 B1**
(45) Date of publication and mention of the grant of the patent: **29.10.2008**
(21) Application number: 05740941.9
(22) Date of filing: 29.04.2005
(51) Int. Cl.: B60N 2/42, B60N 2/66, B60N 2/48

(54) **INTEGRATED LUMBAR AND ACTIVE HEADREST SYSTEM**
INTEGRIERTES LORDOSEN- UND KOPFSTÜTZENSYSTEM
SUPPORT LOMBAIRE ET SYSTEME D'APPUI-TETE ACTIF INTEGRES

(30) Priority: 30.04.2004 US 567238 P
(43) Date of publication of application: 24.01.2007
(60) Divisional application: 07021803.7
(73) Proprietor: L & P Property Management Company, South Gate, CA 90280 (US)
(72) Inventor: SWAN, David, Windsor, Ontario N8P 1K8 (CA); MCMILLEN, Robert, J., Tecumseh, Ontario N8N 4Y3 (CA); COLJA, Renato, Windsor, Ontario N9G 2G7 (CA); CERTOSSI, Stephen, Belle River, Ontario N0R 1A0 (CA); SAMI, Asad, LaSalle, Ontario N9H 2P9 (CA); KUKUROZOVIC, George, Windsor, Ontario N9E 4S5 (CA); RENCZ, Bogdan, Windsor, Ontario N8Z 5S5 (CA)
(74) Representative: Banzer, Hans-Jörg
(86) International application number: PCT/US2005/014662
(87) International publication number: WO 2005/108157

(56) References cited:
- EP-A- 0 353 210
- EP-A- 1 134 115
- DE-A1- 10 006 906
- GB-A- 2 005 131
- US-B1- 6 719 368

## Description

### Cross-Reference to Related Applications

This application claims the benefit of U.S. Provisional Application No. 60/567,238 filed on April 30, 2004 which is incorporated herein by reference.
**Statement Regarding Federally Sponsored Research or Development.**
Not Applicable.
**Appendix.**
Not Applicable.

### Background of the Invention

### 1. Field of the Invention

This invention relates generally to active headrest systems and, more particularly, to active headrest systems combined with lumbar support devices.

### 2. Related Art

Active headrest systems (AHRS) with energy transfer mechanisms are generally known in seat support systems to improve the safety of vehicle passengers in the event of a collision, and improvements have been made to reduce injuries to the neck region of the passenger. In the event of a rearward impact, the occupant of a seat in the vehicle is forced against the seat. Generally, the pelvis and lumbar regions of the occupant initially exert more force on the seatback than do the thoracic or shoulder regions of the occupant, and this initial reaction may separate the seatback from the thoracic, neck, and head regions of the occupant. In some rear impact situations, the upper torso, neck, and head of the passenger can then be forced back into the seatback, resulting in a whiplash effect. Accordingly, dynamic or active headrest mechanisms have been developed to reduce the negative effects of a rearward collision.

Most head restraint systems include a reaction plate or a reaction bar that is supported by the seatback frame in the region generally corresponding to the shoulder position of the occupant. The reaction device is pivotally mounted to a linkage which connects to the headrest. During a rearward collision, the force of the occupant pushes on the plate or bar and actuates the linkage to move the headrest upward and forward toward the head of the occupant, thereby reducing the separation between the seatback and the occupant.

A number of active head restraint systems, such as disclosed in U.S. Patent Nos. 5,378,043, 6,199,947 and 6,565,150, do not integrate a lumbar support with the reaction device whereas other active headrest systems have been combined with lumbar support devices, such as disclosed in U.S. Patent Nos. 5,884,968, 6,375,262 and 6,837,541. Most combinations of active headrest systems with lumbar support devices still require the same discrete energy transfer mechanism and do not use the lumbar support device as an integral part of active headrest system when in a collision mode of operation. Additionally, these combinations are usually limited to a particular type of lumbar device that must be designed specifically according to the active headrest system which can limit the flexibility and range of travel of any such lumbar support system that is incorporated into the AHRS. Such a seat is disclosed by document US 6 719 368 which is the closest prior art document.

Accordingly, there remains a need for a lumbar support system to be integrated with an AHRS in a manner that will not limit the flexibility and range of travel of the lumbar support. Additionally, there is always a need for reducing the cost of devices and finding ways to eliminate assemblies. For example, some assemblies that have been required as a discrete unit based on traditional design methodologies, but when the design process is considered in a different way, some discrete units can actually be replaced by other devices that can perform the same function, making the traditionally discrete unit redundant. Accordingly, the elimination of such a redundant element can save costs in the manufacture and in the maintenance of the system.

Document US 6,719,368 B1 relates to a seat assembly for supporting a seat occupant in an automotive vehicle comprising a seat cushion and a seat back. The seat back includes an outer peripheral frame member and an inner occupant support frame operatively connected and supported by the outer peripheral frame member and moveable from an occupant support position to an impact displacement position extending rearwardly of the outer peripheral frame member. A displaceable connection member operatively connects the inner occupant support frame in the occupant support position during normal use and for providing movement of the inner occupant support frame to the impact displacement position in response to a predetermined impact load exerted on the seat assembly.

### Summary of the Invention

It is in view of the above problems that the present invention was developed. The invention is an improved active headrest system having a headrest, an energy transfer mechanism, and a lumbar device. In the improved system, the lumbar support has a set of operating positions that are not in direct contact with the energy transfer mechanism and another set of impact positions that are in contact with the energy transfer mechanism.

In the present invention, the lumbar support is in a cooperative relationship with a crossbar in the energy transfer mechanism. In particular, to activate the energy transfer mechanism, the lumbar support moves the crossbar which extends inwardly from a pair of side bars. The lumbar support of the present invention is also different from the prior art because the side bars are outside the periphery of the lumbar support. With the side bars outside the lumbar support periphery, the range of travel of the lumbar support is increased and the flexibility of the lumbar support is improved in that different types of devices can be used within the allotted space for the lumbar support.

Instead of connecting the energy transfer mechanism to the top of the lumbar device or the sides of the lumbar device as taught by the prior art systems, the present invention discloses an energy transfer mechanism which has side bars outside the periphery of the lumbar support. According to the present invention, the lumbar support acts against a crossbar that extends inwardly from the side bars which extend along the seat frame.

Further features and advantages of the present invention, as well as the structure and operation of various embodiments of the present invention, are described in detail below with reference to the accompanying drawings.

### Brief Description of the Drawings

The accompanying drawings, which are incorporated in and form a part of the specification, illustrate the embodiments of the present invention and together with the description, serve to explain the principles of the invention. In the drawings:
Figures 1A-1C illustrates one embodiment of the present invention;
Figures 2A-2C illustrates another embodiment of the present invention;
Figures 3-7 are views of the present invention using different lumbar supports;
Figure 8 is a cross-sectional view of the embodiment illustrated in Figure 2A; and
Figure 9 is a cross-sectional view of the embodiment illustrated in Figure 6.

### Detailed Description of the Preferred Embodiments

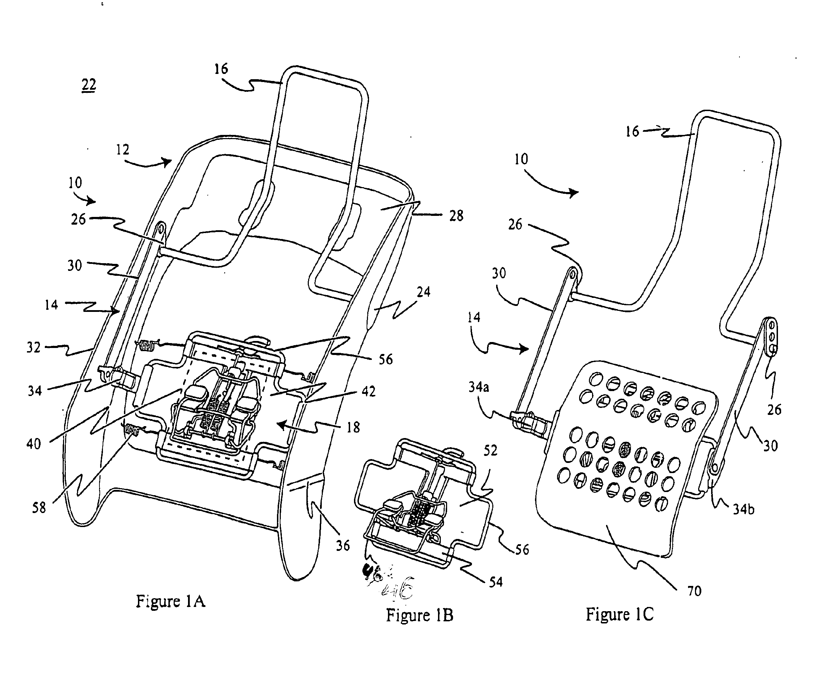

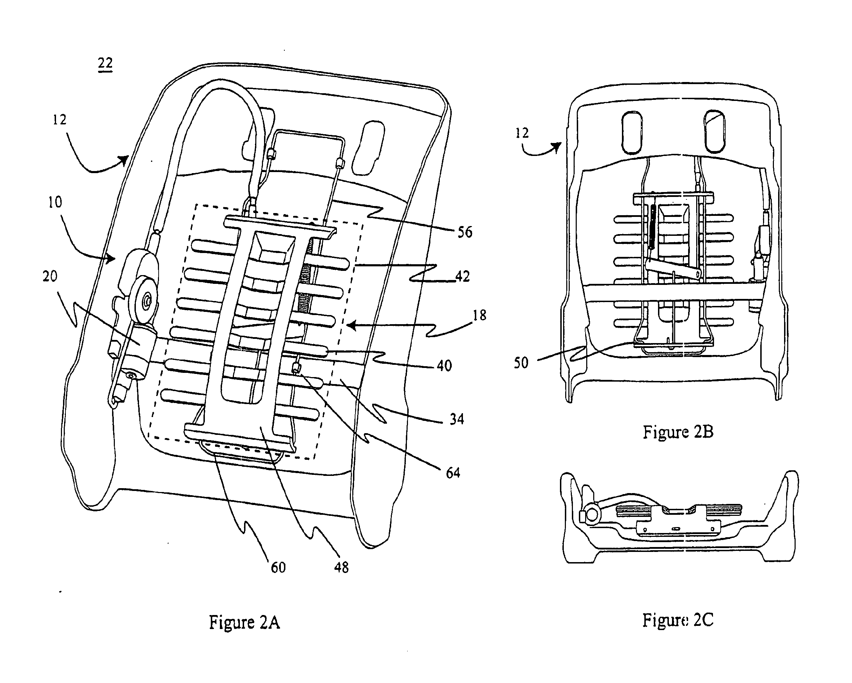

Referring to the accompanying drawings in which like reference numbers indicate like elements, each of the embodiments described below with reference to the corresponding illustrations is for an active headrest system 10 that can be adapted to fit into the seat frame 12 of any vehicle. In Figures 1 and 2, the active headrest system 10 is shown to include an energy transfer mechanism 14 that connects the headrest 16 to the lumbar support 18. The lumbar support 18 is operated by an actuator 20. Generally, the active headrest system 10 combined with the seat frame 12 and the actuator 20 is an integrated active headrest/lumbar seating system 22.

At the upper end 24 of the seat frame 12, a pair of linkages 26 connects the energy transfer mechanism 14 to the headrest 16 which is supported at the upper end 24 by a top beam 28. A pair of side bars 30 extend from the corresponding pair of linkages 26 along the side rails 32 of the seat frame 12 to a crossbar 34. The crossbar 34 connects the pair of side bars 30 at the lower end 36 of the seat frame 12. Accordingly, the pair of linkages 26 are closer to the top beam 24 the upper end 24 of the seat frame 12, closer to the top beam 28, whereas the crossbar 34 is positioned in the lower end 36 of the seat frame 12. At the bottom of the seat frame 12, there may also be a crossbeam 38. The lumbar support 18 is integrated into the active headrest system 10 through its placement in the seat frame 12 relative to the side bars 30 and the crossbar 34. Specifically, the middle section 40 of the lumbar support 18 is situated proximate to the crossbar 34. The lumbar support 18 fits entirely within the side bars 30 such that the pair of side bars 30 are outside the periphery 42 of the lumbar support 18. Therefore, according to the present invention, the lumbar support 18 can be selected from many designs and still function in the active headrest system 10. As respectively illustrated in Figures 1A and 1B, the lumbar support 18 is moved from a retracted position 44 to an extended position 46. Similarly, the actuator 20 can operate the lumbar support 18 illustrated in each of the other drawings.

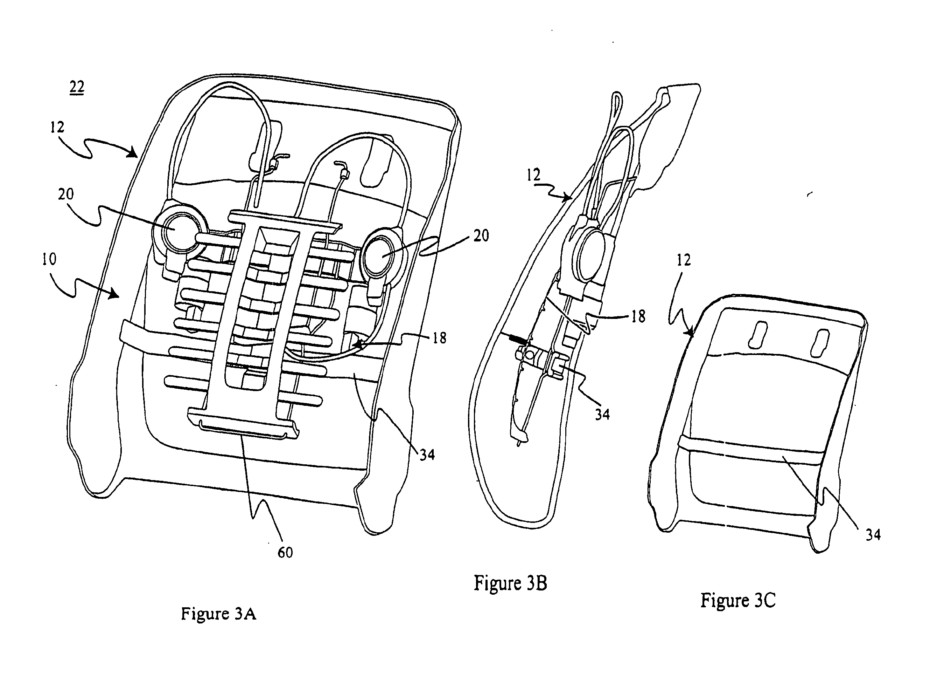

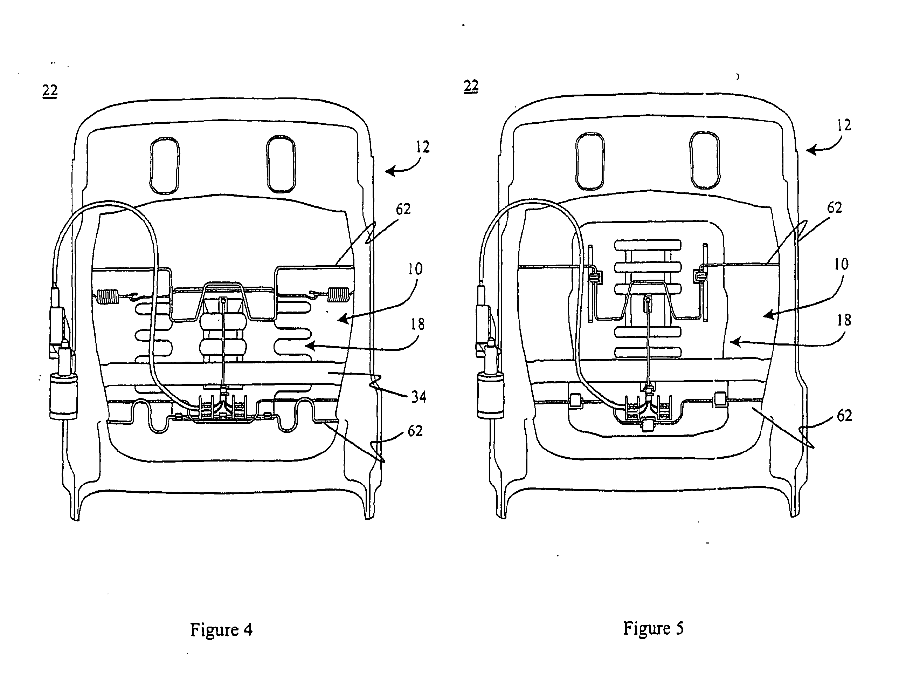

A front side 48 of the lumbar support 18 is shown in Figure 2A and the back side 50 of the lumbar support 18 is shown in Figure 2B. The front side of the lumbar support is also shown in Figure 2C with a bottom view of the seating system 22. Additionally, the front side is shown in Figures 1 and 3, and the back side is shown in Figures 4 and 5. The top section 52 and the bottom section 54 of the lumbar support 18 are connected to the seat frame 12 through support wire sections 56. The support wire sections 56 can attach the lumbar support to the seat frame by any number of formations. As illustrated in Figure 1, the support wire sections 56 can completely surround the periphery 42 of the lumbar support 18, having sections on the top, bottom and each side that are preferably connected to each other. In this embodiment, coil springs 58 connect the wire sections 56 to the seat frame 12, and the support wire sections 56 connect the lumbar support 18 to a pair of crossbar sections 34a, 34 b. In the other embodiments, the crossbar 34 is situated behind the lumbar support 18 and the support wire sections 56 are located between the crossbar 34 and the lumbar support 18. As illustrated in Figures 2 and 3, a continuous support wire 60 can be doubled over and formed into a u-shape that is attached to the seat frame 12 at the top beam 28. As illustrated in Figures 4 and 5, a pair of support wires 62 can span the seat frame 12 between the side rails 32, with the upper support wire being connected to the top section 52 of the lumbar support 18 and the lower support wire being connected to the bottom section 52 of the lumbar support 18. In these embodiments, the upper support wire is angled which allows the top section of the lumbar support to slide.

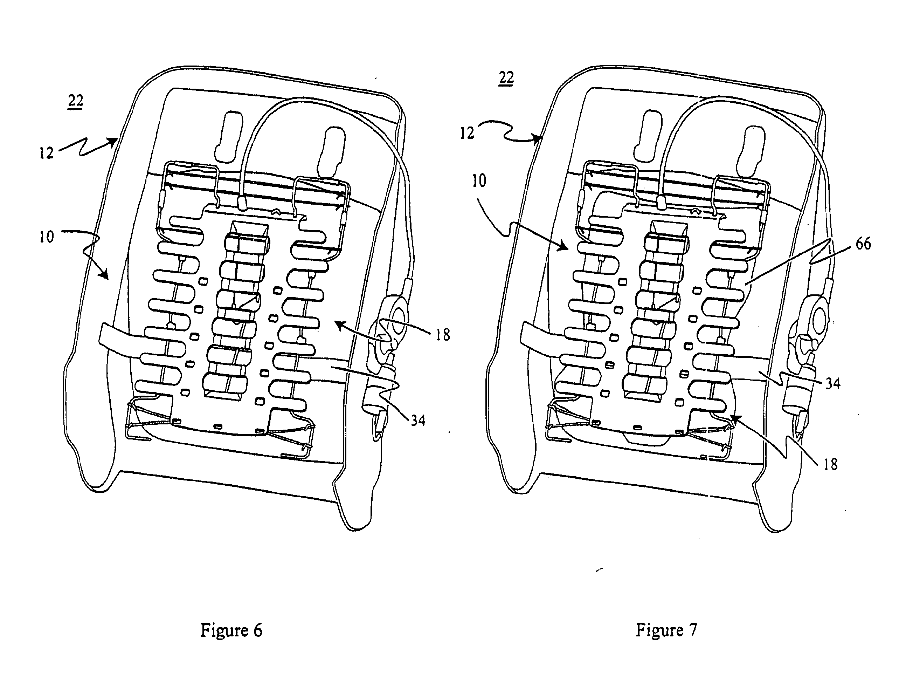

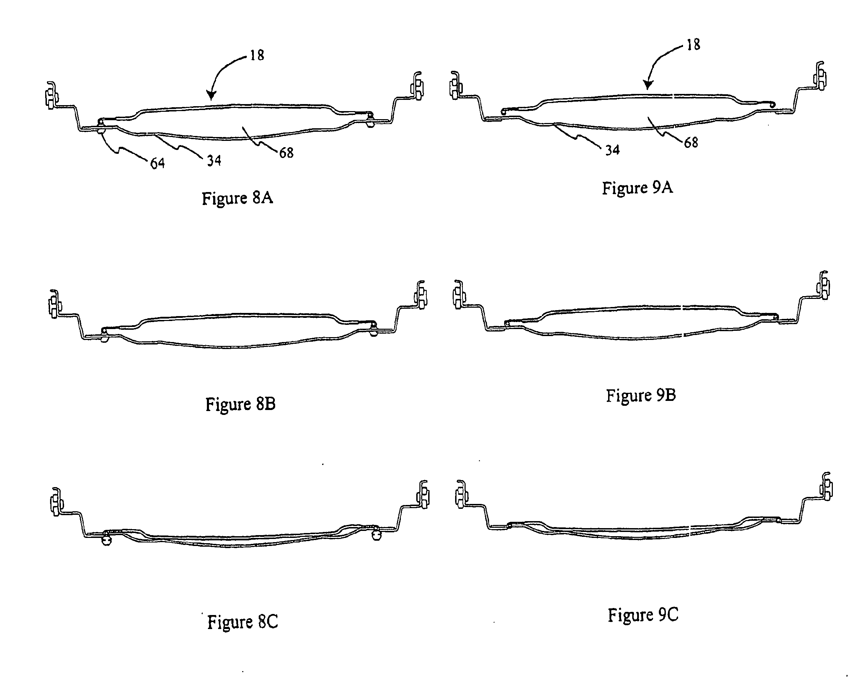

In each one of the embodiments, the support wire sections 56 space the lumbar support 18 from the crossbar 34. In the embodiment illustrated in Figure 1, the spacing is on the sides of the lumbar support 18, whereas in the other embodiments, the spacing is behind the lumbar support 18. As illustrated in Figures 2 and 8, clips 64 can be used to attachment the support wire sections 56 to the crossbar 34. Alternatively, there may be no attachment between the support wire sections 56 and the crossbar 34 as shown in Figures 6 and 9. As illustrated in Figure 7, clips can also attach a reaction plate 66 to the lumbar support 18. With the reaction plate situated between the lumbar support 18 and the crossbar 34, the reaction plate 66 can be attached to or integrally formed with the crossbar or it may not have any attachment to the crossbar.

Figures 8A and 9A illustrate the normal operating mode of the lumbar support, in which the support wire sections 56 provide a spatial distance 68 between the lumbar support 18 and the crossbar 34. In Figure 8A, the clips 64 attach the support wire sections 56 to the crossbar 34, whereas there is no connection between the crossbar 34 and the support wire sections 56 in Figure 9A. Figures 8B and 9B illustrate the impact condition where the support wire sections 56 have been driven back toward the crossbar 34 and there is no longer any spatial distance between the support wire sections 56 and the crossbar 34. As particularly illustrated in Figure 8B, the clips 64 are driven further into the crossbar 34. Figures 8C and 9C illustrate the impact condition where the lumbar support 18 has been driven back such that there is no longer any spatial distance and the lumbar support 18 impacts the cross bar 34.

The energy transfer mechanism typically includes a reaction plate and/or a reaction bar. As illustrated in Figure 1C, the lumbar support 18 can include a plate 70 which is operated during the normal modes of operation and which serves as a reaction plate to transfer the impact forces through the lumbar support 18 and to the crossbar 34 and the remainder of the energy transfer system. In this manner, it will be appreciated that the lumbar support is an integral part of the energy transfer system. The lumbar support 18 has a set of operating positions do not engage the side bars 30 in the energy transfer mechanism and another set of impact positions that are enga ge the side bars 30 in the energy transfer mechanism.

In Figure 3B, a side view of the lumbar 18 is shown relative to the crossbar 34 with one side of the seat frame 12 cut-away. In Figure 3C, the lumbar support 18 is removed from the illustration to particularly show the crossbar 34 within the seat frame 12.

As particularly illustrated in Figures 6 and 9A-9C, the lumbar support 18 can be integral with the active headrest system, but in the normal modes of operation for the lumbar support, there is no physical link with the energy transfer mechanism. Instead, the lumbar support has a spatial relationship, or a spatial link, with the energy transfer mechanism. The spatial link closes due to the force of a collision, thereby bringing the lumbar into direct contact with energy transfer mechanism. The lumbar support 18 in Figure 7 is also spaced from the energy transfer mechanism by the reaction plate 66 which may also be spaced from the energy transfer mechanism.

The connection between the seat frame 12 and the lumbar support 18 can be any type of hardware, such as links, brackets, snap-fit clips, springs, or any other equivalent fastener. To further aid in the flexibility and range of travel of the lumbar support 18, it is preferable for a bowden cable to connect the lumbar to any actuator that may be used for translation and/or curvature. Such an actuator can be a motorized actuator or a manual actuator. According to the present invention, any suitable energy transfer mechanism would be acceptable for the operation of the seating system. The structural elements can be made from metal, plastic, structural foam or any other equivalent material. Generally, the structure allows sufficient energy to be transferred through the lumbar support to the active headrest system for its proper activation.

As various modifications could be made in the constructions and methods herein described and illustrated without departing from the scope of the invention, it is intended that all matter contained in the foregoing description or shown in the accompanying drawings shall be interpreted as illustrative rather than limiting. For example, it will be appreciated that the spring links between the frame and the lumbar can be any type of compliant connection. Thus, the breadth and scope of the present invention should not be limited by any of the above-described exemplary embodiments, but should be defined only in accordance with the following claims appended hereto and their equivalents.

## Claims

1. A seating system, comprising:
a seat frame (12) comprising a pair of side rails (32) and a top beam (28);
an energy transfer mechanism (14) comprising a pair of side bars (30), a pair of linkages (26), and a crossbar (34) connected between said pair of side bars (30), wherein said pair of side bars (30) extend along said side rails (32) from pair of linkages (26) proximate to said top beam (28) to said crossbar (34) distal from said top beam (28);
a headrest (16) supported by said top beam (28) of said seat frame (12) and connected to said energy transfer mechanism (14) through said pair of linkages (26);
a lumbar support (18) connected to said seat frame (12), said lumbar support (18) comprising a front side (48), a back side (50), a top section (52), a bottom section (54) and a middle section (40) therebetween, wherein a periphery of said lumbar support (18) is located inside said pair of side bars (30), said crossbar (34) connecting said pair of side bars (30), and wherein said middle section (40) is located proximate to said crossbar (34) wherein said lumbar support (18) has a set of operating positions and a set of impact positions; and
an actuator (20) operatively connected to said lumbar support (18), said actuator (20) moving said lumbar support (18) through said set of operating positions from a first position to a second position, wherein said set of operating positions is not in contact with said energy transfer mechanism (14) and wherein said set of impact positions is in contact with said energy transfer mechanism (14) through said crossbar (34).

2. The seating system set forth in claim 1, further comprising a plurality of support wire sections (56) attaching said lumbar support (18) to said seat frame (12).

3. The seating system set forth in claim 2, wherein said support wire sections (56) surround said periphery of said lumbar support (18) and attach said crossbar (34) to said lumbar support (18), said crossbar (34) comprising a pair of crossbar sections connected between said pair of side bars (30) through said support wire sections (56).

4. The seating system set forth in claim 2, wherein said crossbar (34) extends behind said back side (50) of said lumbar support (18).

5. The seating system set forth in claim 4, wherein said support wire sections (56) are located between said crossbar (34) and said lumbar support (18).

6. The seating system set forth in any one of claims 2-4, further comprising a plurality of clips (64) attaching said lumbar support (18) to said support wire sections (56) and said crossbar (34).

7. The seating system set forth in claim 6, further comprising a reaction plate (66) situated between said lumbar support (18) and said crossbar (34).

8. The seating system set forth in any one of claims 2-7, wherein said lumbar support (18) and said support wire sections (56) are unconnected to said energy transfer mechanism (14).

## Patentansprüche

1. Sitzsystem umfassend:
einen Sitzrahmen (12), welcher ein Paar Seitenschienen (32) und einen oberen Träger (28) umfasst;
einen Energieübertragungsmechanismus (14), welcher ein Paar Seitenstreben (30), ein Paar Verbindungselemente (26) und eine Querverstrebung (34), welche zwischen dem Paar Seitenstreben verbunden ist, umfasst, wobei sich das Paar Seitenstreben (30) entlang der Seitenschienen (32) von dem Paar Verbindungselemente (26) in der Nähe des oberen Trägers (28) zu der Querverstrebung (34) distal zu dem oberen Träger (28) erstreckt;
eine Kopfstütze (16), welche durch den oberen Träger (28) des Sitzrahmens (12) gehalten wird und durch das Paar Verbindungselemente (26) mit dem Energieübertragungsmechanismus (14) verbunden ist;
eine Lordosenstütze (18), welche mit dem Sitzrahmen (12) verbunden ist, wobei die Lordosenstütze (18) eine vordere Seite (48), eine hintere Seite (50), einen oberen Abschnitt (52), einen unteren Abschnitt (54) und einen mittleren Abschnitt (40) dazwischen umfasst, wobei ein Umfang der Lordosenstütze (18) innerhalb des Paars Seitenstreben (30) angeordnet ist, wobei die Querverstrebung (34) das Paar Seitenstreben (30) verbindet, und wobei der mittlere Abschnitt (40) in der Nähe der Querverstrebung (34) angeordnet ist, wobei die Lordosenstütze (18) eine Menge von Betriebsstellungen und eine Menge von Aufprallstellungen aufweist; und
ein Bedienelement (20), welches betriebsfähig mit der Lordosenstütze (18) verbunden ist, wobei das Bedienelement (20) die Lordosenstütze (18) von einer ersten Stellung zu einer zweiten Stellung durch die Menge der Betriebsstellungen bewegt, wobei sich die Menge der Betriebsstellungen nicht im Kontakt mit dem Energieübertragungsmechanismus (14) befindet und wobei sich die Menge der Aufprallstellungen durch die Querverstrebung (34) im Kontakt mit dem Energieübertragungsmechanismus (14) befindet.

2. Sitzsystem nach Anspruch 1, darüber hinaus mehrere Haltedrahtabschnitte (56) umfassend, welche die Lordosenstütze (18) an dem Sitzrahmen (12) anbringen.

3. Sitzsystem nach Anspruch 2, **dadurch gekennzeichnet, dass** die Haltedrahtabschnitte (56) den Umfang der Lordosenstütze (18) umgeben und die Querverstrebung (34) an der Lordosenstütze (18) anbringen, wobei die Querverstrebung (34) ein Paar Querverstrebungsabschnitte umfasst, welche durch die Haltedrahtabschnitte (56) zwischen dem Paar Seitenstreben (30) verbunden sind.

4. Sitzsystem nach Anspruch 2, **dadurch gekennzeichnet, dass** sich die Querverstrebung (34) hinter der hinteren Seite (50) der Lordosenstütze (18) erstreckt.

5. Sitzsystem nach Anspruch 4, **dadurch gekennzeichnet, dass** die Haltedrahtabschnitte (56) zwischen der Querverstrebung (34) und der Lordosenstütze (18) angeordnet sind.

6. Sitzsystem nach einem der Ansprüche 2-4, darüber hinaus mehrere Haltevorrichtungen (64) umfassend, welche die Lordosenstütze (18) an den Haltedrahtabschnitten (56) und der Querverstrebung (34) anbringen.

7. Sitzsystem nach Anspruch 6, darüber hinaus eine Reaktionsplatte (66) umfassend, welche sich zwischen der Lordosenstütze (18) und der Querverstrebung (34) befindet.

8. Sitzsystem nach einem der Ansprüche 2-7, **dadurch gekennzeichnet, dass** die Lordosenstütze (18) und die Haltedrahtabschnitte (56) nicht mit dem Energieübertragungsmechanismus (14) verbunden sind.

## Revendications

1. Système de siège, comprenant :
un cadre de siège (12) comprenant une paire de rails latéraux (32) et une poutre supérieure (28) ;
un mécanisme de transfert d'énergie (14) comprenant une paire de barres latérales (30), une paire de liaisons (26), et une barre transversale (34) raccordée entre ladite paire de barres latérales (30), dans lequel ladite paire de barres latérales (30) s'étend le long desdits rails latéraux (32) de la paire de liaisons (26) proche de ladite poutre supérieure (28) vers ladite barre transversale (34) distale par rapport à ladite poutre supérieure (28) ;
un appui-tête (16) supporté par ladite poutre supérieure (28) dudit cadre de siège (12) et relié audit mécanisme de transfert d'énergie (14) par le biais de ladite paire de liaisons (26) ;
un support lombaire (18) relié audit cadre de siège (12), ledit support lombaire (18) comprenant un côté avant (48), un côté arrière (50), une section supérieure (52), une section inférieure (54) et une section centrale (40) entre elles, dans lequel une périphérie dudit support lombaire (18) est située à l'intérieur de ladite paire de barres latérales (30), ladite barre transversale (34) reliant ladite paire de barres latérales (30), et dans lequel ladite section centrale (40) est située près de ladite barre transversale (34), dans lequel ledit support lombaire (18) a un ensemble de positions de fonctionnement et un ensemble de positions d'impact ; et
un dispositif d'actionnement (20) raccordé de manière opérationnelle audit support lombaire (18), ledit dispositif d'actionnement (20) déplaçant ledit support lombaire (18) à travers ledit ensemble de positions opérationnelles d'une première position à une seconde position, dans lequel ledit ensemble de positions opérationnelles n'est pas en contact avec ledit mécanisme de transfert d'énergie (14) et dans lequel ledit ensemble de positions d'impact est en contact avec ledit mécanisme de transfert d'énergie (14) à travers ladite barre transversale (34).

2. Système de siège selon la revendication 1, comprenant en outre une pluralité de sections de câbles de support (56) fixant ledit support lombaire (18) audit cadre de siège (12).

3. Système de siège selon la revendication 2, dans lequel lesdites sections de câble de support (56) entourent ladite périphérie dudit support lombaire (18) et fixent ladite barre transversale (34) audit support lombaire (18), ladite barre transversale (34) comprenant une paire de sections de barre transversale connectées entre ladite paire de barres latérales (30) à travers lesdites sections de câbles de support (56).

4. Système de siège selon la revendication 2, dans lequel ladite barre transversale (34) s'étend derrière le côté arrière (50) dudit support lombaire (18).

5. Système de siège selon la revendication 4, dans lequel lesdites sections de câble de support (56) sont situées entre ladite barre transversale (34) et ledit support lombaire (18).

6. Système de siège selon l'une quelconque des revendications 2-4, comprenant en outre une pluralité d'agrafes (64) fixant ledit support lombaire (18) auxdites sections de câble de support (56) et à ladite barre transversale (34).

7. Système de siège selon la revendication 6, comprenant en outre une plaque de réaction (66) située entre ledit support lombaire (18) et ladite barre transversale (34).

8. Système de siège selon l'une quelconque des revendications 2-7, dans lequel ledit support lombaire (18) et lesdites sections de câble de support (56) ne sont pas connectées audit mécanisme de transfert d'énergie (14).
